# EUROPÄISCHE PATENTANMELDUNG

(11) **EP 1 122 689 A2**
(43) Veröffentlichungstag der Anmeldung: **08.08.2001**
(21) Anmeldenummer: 01102473.4
(22) Anmeldetag: 03.02.2001
(51) Int. Cl.: G06T 5/00

(54) **Verfahren zur Verbesserung digitaler Bilder**

(30) Priorität: 03.02.2000 DE 10004631
(71) Anmelder: Agfa-Gevaert AG, 51373 Leverkusen (DE)
(72) Erfinder: Fürsich, Manfred, Dr., 82024 Taufkirchen (DE); Damm, Tobias, Dr., 81545 München (DE); Taresch, Gudrun, Dr., 80337 München (DE); Schuhrke, Thomas, Dr., 81549 München (DE); Oberhardt, Knut, 83607 Föching (DE)

(57) **Zusammenfassung**

Die Erfindung betrifft Verfahren zum Bearbeiten digitaler Bilder oder Detektieren von Kanten. Die Bilder werden durch Einscannen fotografischer Filme gewonnen. Daraufhin wird die Kömigkeit von zu bearbeitenden Bildern ermittelt. Im Rahmen der Bildbearbeitung oder Kantendetektion werden nun Filter und/oder 1-bzw. 3-dimensionale Kennlinien auf die Bilddaten angewandt werden, wobei die Filter und/oder die Kennlinien in Abhängigkeit von der ermittelten Körnigkeit gebildet werden. Durch die Berücksichtigung der Körnigkeit kann verhindert werden, dass die Körnigkeit des Bildes im Zuge der Bildbearbeitung verstärkt wird oder die Körner fälschlicherweise als Kanten detektiert werden.

## Beschreibung

Die Erfindung betrifft Bildverarbeitungsverfahren.

Bildverarbeitungsverfahren werden dazu verwendet, digitale Bilddaten zu verändern, zu verbessern oder optimal auf ein Ausgabemedium, wie beispielsweise einen Bildschirm oder einen Drucker anzupassen.

Es sind verschiedene Anmeldungen bekannt, die sich mit derartigen Bildverarbeitungsverfahren befassen.

Die US 4,591,923 beschreibt beispielsweise ein Verfahren, mit dem der Schärfeeindruck von Bildern erhöht wird, welche auf einem Farblaserdrucker oder Facsimilegerät ausgegeben werden sollen. Um das Bild zu verschärfen, wird durch Anwendung von Filtern ein Schärfesignal S und ein Unschärfesignal U sowie ein Differenzsignal S-U gebildet. Das Differenzsignal wird mit einem Koeffizienten K multipliziert, der eine Funktion des scharfen Signals S und des Differenzsignals S-U ist. Die Funktion für den Wert K ist in einer Tabelle abgelegt. Das, mit dem Koeffizienten K multiplizierte Differenzsignal wird anschließend zu dem scharfen Signal S addiert. Dadurch wird das Schärfesignal S, welches dem Hochpaßanteil des Bildsignales entspricht, verstärkt, es entsteht ein schärferer Bildeindruck.

Ein weiteres Verfahren zur Bildverarbeitung ist in der EP-PS 0 153 167 beschrieben. Hier wird ebenfalls die Detailinformation, die dem Hochpaßsignal entspricht, verstärkt, so dass ein schärferer Bildeindruck entsteht. Das geschieht, indem ein Fenster um das zu bearbeitende Pixel gelegt wird. Dann wird die mittlere Dichte innerhalb des Fensters ermittelt. Diese entspricht dem Tiefpaßsignal. Zu jedem Bildpunkt innerhalb des Fensters wird nun die Standardabweichung der Pixel vom Mittelwert gebildet. Die Standardabweichung, die als Kantendetektionsfilter interpretiert werden kann, wird verwendet, um einen Verstärkungskoeffizienten als Funktion der Standardabweichung und des Bildsignals zu bilden. Dieser Verstärkungskoeffizient wird auf die Differenz zwischen Dichtewert des zentralen Pixels und Mittelwert (Bild- und Tiefpaßsignal) multipliziert, wobei ein verstärktes Hochpaßsignal entsteht. Dieses wird anschließend zum Mittelwert (Tiefpaßsignal) addiert.

Bei diesen beiden Verfahren, die zur Verbesserung des Bildeindrucks beitragen, besteht jedoch das Problem zu unterscheiden, bei welchen Bilddaten es sich um Detailinformationen handelt, die verstärkt werden soll und welche Bilddaten ein Rauschen der Daten wiedergeben, welches auf keinen Fall verstärkt werden sollte.

Ein Verfahren zur Verbesserung eines digitalen Bildes aus der Medizintechnik ist in der US 5,978,518 beschrieben. Hier wird das Bildsignal tiefpaßgefiltert und das Tiefpaßsignal vom Bildsignal subtrahiert, um das Hochpaßsignal zu bilden. Auf das Hochpaßsignal wird anschließend eine Verschärfungskennlinie angewandt, um die Bilddetailinformation hervorzuheben. Schließlich werden verschärftes Hochpaß- und Tiefpaßsignal wieder addiert, um so das Ausgabebildsignal zu erhalten. Zur Verschärfung können verschiedene Verschärfungskennlinien gewählt werden, welche vorher gebildet und abgelegt werden. Eine bevorzugte Kennlinie, die dazu dient das Bild zu verschärfen, ohne dabei das Rauschen zu verstärken, wird durch Statistiken gebildet. Hierzu wird das zu verschiedenen Helligkeiten im Originalbild gehörige Rauschen ermittelt und die Kennlinie unter Berücksichtigung der Ergebnisse eines Kantendetektors so gebildet, dass bei kleinem Signal-zu-Rauschverhältnis möglichst wenig verschärft wird.

Dieses Verfahren ist jedoch nur bei einer festen Konfiguration (von Film, Scanner etc.) einwandfrei anwendbar. Sobald sich die Abbildungsbedingungen, der verwendete Filmtyp oder ähnliches verändern, können die abgelegten Kennlinien nicht mehr angewendet werden.

Es sind weitere Bildverarbeitungsverfahren bekannt, welche dazu dienen, eine möglichst realistische, qualitativ hochwertige Wiedergabe eines Farbbildes zu ermöglichen.

Ein Beispiel hierfür offenbart die EP-PS 0 550 243. Diese Schrift behandelt ein Farbbildverarbeitungsverfahren, das dazu dient, Farbfehler eines aus vielen Pixeln bestehenden Bildes bei seiner Wiedergabe auf Facsimile-Geräten oder Farbkopierern zu vermeiden. Hierzu wird die Farbe jedes einzelnen Pixels ermittelt und diese Farbe auf eine Zielfarbe neu abgebildet. Die Zielfarbe ergibt sich daraus, dass das Objekt bestimmt wird, in dem das zu korrigierende Pixel liegt. Anschließend wird in jeder Farbe ein Farbhistogramm der Pixel innerhalb dieses Objektes gebildet. Aus den Mittelwerten der Farbhistogramme ergibt sich dann die Zielfarbe des Objekts und damit die Zielfarbe eines Pixels innerhalb des Objekts. Bei stark verrauschten Bildern ist es bei diesem Verfahren jedoch oft schwierig, die Objekte zu definieren, da starke Dichteschwankungen aufgrund des Rauschens nur schwer von Kanten abzugrenzen sind, welche Detailinformation des Bildes wiedergeben.

Ein weiteres Bildbearbeitungsverfahren ist in der WO 91/15078 beschrieben. Ziel dieser Schrift ist es, beim Herstellen von Abzügen von Bildern digitaler Kameras die Farbwiedergabe und die Qualität der Bilder zu verbessern. Hierzu sollen insbesondere im Grünkanal, für den die Augen stark empfindlich sind, die Bilder verschärft und das Rauschen unterdrückt werden. Das geschieht dadurch, dass der grüne Anteil des Farbsignals gefiltert und anschließend auf das gefilterte Signal eine Kennlinie angewandt wird. Die Kennlinie ist derart ausgebildet, dass der Anteil der Bildsignale, welche das Rauschen des Bildes bewirken, unterdrückt werden, während der Anteil der Bildsignale, der für den Bildeindruck maßgeblich ist, verstärkt werden soll. Bei diesem Verfahren ist es schwierig zu unterscheiden, welcher Anteil des Bildsignals für Störungen im Bildeindruck verantwortlich ist, welche unterdrückt werden sollen, und wo der Anteil der bildwichtigen Detailinformation beginnt, welcher verloren ginge, wenn man ihn mittels der Kennlinie unterdrückt.

Weiterhin ist bekannt, vor dem Drucken digitaler Bilder Gradationskorrekturen vorzunehmen. In der DE-PS 38 24 096 wird vorgeschlagen, das Bild je nach gewünschtem Kontrast mit unterschiedlich steilen Gradationskennlinien zu beaufschlagen. Bei sehr starken Kontrastaufsteilungen wird dabei jedoch oftmals geringes Rauschen so verstärkt; dass es die Bildqualität massiv beeinträchtigt.

Aufgabe der Erfindung war es deshalb, die bestehenden Nachteile und Schwierigkeiten der gängigen Bildverarbeitungsverfahren zu beseitigen und Bildverarbeitungsverfahren so zu modifizieren, dass durch die Bearbeitung des Bildes keine Artefakte oder Störungen auftreten.

Gelöst wird diese Aufgabe gemäß der Erfindung durch ein Verfahren mit den Merkmalen von Anspruch 1 und Anspruch 13.

Erfindungsgemäß wird bei einem Verfahren zur Bearbeitung digitaler Bilder, bei dem beispielsweise die Farbe, die Helligkeit, der Kontrast, der Schärfeeindruck oder anderes verbessert werden soll, indem auf die durch Einscannen fotografischer Filme gewonnenen Bilddaten Filter und/oder 1- oder 3-dimensionale Kennlinien angewandt werden, dadurch vorteilhaft modifiziert, dass im Rahmen dieses Verfahrens die Körnigkeit von eingescannten Bildern ermittelt und diese Körnigkeit bei der Wahl bzw. Bildung der Filter und/oder Kennlinien berücksichtigt wird.

Dadurch, dass die Körnigkeit der Bilder bei dem jeweiligen Bildverarbeitungsverfahren mit einbezogen wird, kann verhindert werden, dass die Körner nach der Bearbeitung des Bildes stärker hervortreten, als beim unbearbeiteten Bild. Die Filmkörner sind bei den Bildern von fotografischen Filmen hauptverantwortlich für den vom Auge wahrgenommenen verrauschten Bildeindruck. Durch das erfindungsgemäße Verfahren wird somit verhindert, dass das Rauschen im Bild verstärkt wird, bzw. es wird ermöglicht, dass das Rauschen im Vergleich zum Bildinhalt zurückgedrängt wird dadurch, dass insbesondere der Bildinformation enthaltende Anteil der Bildsignale hervorgehoben und verbessert wird.

Um die Körnigkeit der Bilder zu bestimmen können der zu jedem Film charakteristische DX-Code in Verbindung mit sogenannten PQI-Daten, welche insbesondere bei APS-Filmen verfügbar sind, verwendet werden. DX-Code und Daten geben eine grobe Abschätzung für die Kömigkeit des Bildes, da diese vom Filmtyp und den in den PQI-Daten abgespeicherten übergeordneten Belichtungsbedingungen abhängt. Unberücksichtigt bleiben hierbei jedoch die Bedingungen, unter denen der Film gescannt wurde, die Belichtungsstärke, mit der das einzelne Bild aufgenommen wurde sowie die Entwicklungsbedingungen. All diese Größen haben aber einen starken Einfluss auf die sich effektiv im Bild zeigende Korngröße, die deshalb von der geschätzten abweichen kann. Vorteilhaft an diesem Verfahren zur Bestimmung der Körnigkeit ist dagegen, dass es nicht sehr aufwendig ist.

Ein genaueres Verfahren zur Bestimmung der Kömigkeit, das den aktuellen Belichtungs-, Entwicklungs- und Scannbedingungen der Bilder Rechnung trägt, besteht darin, die eingescannten Bilddaten einer Fourier-Transformation zu unterziehen und aus dem transformierten Frequenzbild die Kömigkeit zu ermitteln. Auf dieses Verfahren wird im Rahmen der Ausführungsbeispiele noch näher eingegangen.

Sobald die Körnigkeit, also Größe und Abstand der Körner, charakterisiert durch die durchschnittliche durch die Körner verursachte Amplitude der Dichteschwankungen im Bild sowie deren Abstand bekannt ist, kann diese Körnigkeit bei der Bearbeitung der Bilddaten berücksichtigt werden.

Eine Möglichkeit wäre es, nun die ermittelte Körnigkeit zur Rauschunterdrückung zu verwenden. Dabei geht man üblicherweise so vor, dass alle Bildsignale, die oberhalb einer Grenzfrequenz liegen, abgeschnitten werden. Dieses Verfahren wird durch das Wählen der Kornfrequenz als Grenzfrequenz zwar optimiert, hat aber den Nachteil, dass durch das Abschneiden nicht nur die Körner, also das Rauschen im Bild eliminiert wird, sondern auch hochfrequente Bildanteile, die beispielsweise an scharfen Kanten auftreten, verlorengehen. Das führt zu einem unerwünschten flauen Eindruck des Bildes.

Ferner ist das Auge des Fotoliebhabers an eine gewisse Körnigkeit im Bild gewöhnt, so dass Bilder, die eine gewisse Körnigkeit aufweisen, ohne dass diese stört, realistischer wirken und bevorzugt werden.

Es ist also vorteilhafter, die Körner nicht vollständig zu unterdrücken, sondern in dem anzuwendenden Bildverarbeitungsverfahren zu berücksichtigen.

Die Information über die Körnigkeit läßt sich besonders vorteilhaft bei Bildverarbeitungsverfahren einsetzen, welche, wie das in der DE-PS 38 240 96 beschriebenen Verfahren, dazu dienen, mittels einer Gradationskorrektur ein eher flaues Bild kontrastreicher zu machen. Bei sehr starken Kontrastanhebungen besteht nämlich die Gefahr, dass auch die im Bild bereits vorhandene Körnigkeit unangenehm verstärkt wird. Um das zu verhindern ist es sinnvoll, sehr körnige Bilder nicht so stark aufzustellen. Es empfiehlt sich also, die Kennlinie, die zur Gradationskorrektur verwendet wird, abhängig von der Körnigkeit des zu bearbeitenden Bildes zu machen. Nur bei Bildern mit geringer Körnigkeit sollte eine sehr steile Gradationskennlinie verwendet werden.

Ein weiteres Bildverarbeitungsverfahren, bei dem es sehr vorteilhaft ist die Körnigkeit mit einzubeziehen ist die Verschärfung. Bei der Verschärfung von Bilddaten wird ein brillanterer Bildeindruck erzielt, indem die Detailinformation des Bildes angehoben wird. Dabei ist es besonders unvorteilhaft, wenn auch das durch die Körnigkeit bestimmte Rauschen verstärkt wird.

Bei einem Verschärfungsverfahren, welches mittels Standardabweichung oder Differenzenbildung arbeitet, wie es beispielsweise in der EP-PS 0 153 167 beschrieben wird, wird vorteilhafterweise die Größe des Fensters um das zu bearbeitende Pixel in Abhängigkeit von der Korngröße gewählt. Tritt innerhalb eines solchen Fensters, das größer als die Korngröße gewählt wurde, kein Dichtesprung auf, so ist die in diesem Fenster ermittelte Standardabweichung ein Maß für die Schwankungen, die durch die Körner bedingt sind. Das heißt, Standardabweichungen, die in diesem Rahmen bleiben, sind kein Anzeichen für einen wirklichen Dichtesprung im Bildinhalt. Demzufolge dürfen erst Sprünge, die diese Standardabweichung überschreiten, verschärft werden, um zu vermeiden, dass die Körnigkeit des Bildes erhöht wird.

Wird der Schärfeeindruck eines Bildes anhand eines Verfahrens, welches, wie in der US 4,591,923 beschrieben, mit Hoch- und Tiefpaßfiltern arbeitet, erhöht, so kann ebenfalls der Kömigkeit Rechnung getragen werden. Bei einem derartigen Verfahren ist es vorteilhaft, den Hochpaßfilter so zu wählen, dass die Kömer nicht mitverschärft werden. Da die Körner in der Regel eine sehr hohe Frequenz haben, ist es vorteilhaft, den Hochpaßanteil so zu wählen, dass er zwischen dem Tiefpaß und der Kömerfrequenz liegt.

Ein weiteres Verfahren, das Bestandteil sehr vieler Bildverarbeitungsverfahren ist, ist die Kantenerkennung. Sie dient dazu, sogenannte Kanten, also Dichtesprünge im Bild zu detektieren; so dass diese Dichtesprünge anders bearbeitet werden können als die homogenen Bildanteile. Beispiele für Verfahren zur Kantenerkennung werden detailliert in "Two-Dimensional Signal and Image Processing" von Jae S. Lim, Prentice-Hall (1990), Seiten 476-495, beschrieben. Eine weitere Abhandlung über Kantenerkennungsverfahren findet sich in "Fundamentals of Digital Image Processing" von A. K. Jain, Prentice-Hall (1989), Seiten 347-357, wie der US 5,719,958 zu entnehmen ist.

Grundsätzlich dienen all diese Kantenerkennungsverfahren dazu, den Dichteunterschied zwischen Pixeln in einem zu wählenden Abstand voneinander zu bestimmen und eine Kante zwischen den Pixeln zu detektieren, sobald dieser Dichteunterschied eine bestimmte Schwelle überschreitet. Da auch die Körnigkeit des Bildes zu Dichteunterschieden führt, besteht die Gefahr, auch diese Filmkörner als Kanten zu detektieren. Um dies zu vermeiden, könnte man die Schwelle, die eine Kante definiert, sehr hoch ansetzen, was jedoch dazu führen kann, dass kleinere Kanten, die für die Detailinformation des Bildes verantwortlich sind, nicht erkannt werden.

Auch bei diesem Verfahren ist es deshalb besonders vorteilhaft, die Kömigkeit des Bildes zu berücksichtigen. Dies kann beispielsweise dadurch geschehen, dass der Abstand der zu betrachtenden Pixel immer größer als der Kornabstand gewählt wird. Noch sicherer ist es, den Schwellwert oberhalb der Komamplitude festzulegen.

Dadurch ist gewährleistet, dass nur wirklich bildinhaltsabhängige Kanten als solche erkannt werden und nicht fälschlich durch die Körnigkeit bedingte Dichteschwankungen als Kanten detektiert werden. Dies ist insbesondere dann wichtig, wenn die Kantenerkennung im Bildverarbeitungsverfahren wie der Verschärfung eingesetzt wird. Wie beispielsweise in der US 5,978,518 beschrieben, kann die Kantenerkennung nämlich dazu verwendet werden, eine Verschärfungskennlinie zu generieren. Berücksichtigt diese Verschärfungskennlinie nun fälschlicherweise die Körnigkeit des Bildes anstelle von Detailinformation, so wird diese Körnigkeit bei Anwendung der Verschärfungskennlinie verstärkt. Bei Verschärfungsverfahren, die die Erkennung von Kanten einbeziehen, ist es also besonders vorteilhaft, ein Kantenerkennungsverfahren zu verwenden, welches die Körnigkeit des Films berücksichtigt, um zu vermeiden, dass diese Körnigkeit bei der Verschärfung mitverstärkt wird.

Eine eindeutige Detektion der Kanten ist aber auch dann von zentraler Bedeutung, wenn die Kantenerkennung zur Objekterkennung verwendet wird. In diesem Zusammenhang wird durch das erfindungsgemäße Verfahren sichergestellt, dass eine detektierte Kante wirklich den Rand eines Bildobjektes anzeigt und nicht der Körnigkeit des Bildes zuzuschreiben ist. Durch eine eindeutigere Objekterkennung werden Verfahren wie das in der EP-PS 0 550 243 beschriebene, objektabhängige Farbkorrekturverfahren weniger fehleranfällig.

Prinzipiell erweist sich eine korngrößenabhängige Kantenerkennung in all den Bildverarbeitungsverfahren als vorteilhaft, in denen die Kantenerkennung dazu dient, das Bild in Kanten- und Nichtkanten-Gebiete aufzuteilen, um diese verschiedenen Gebiete mittels Bildverarbeitungsverfahren unterschiedlich zu behandeln. Da bei diesen Verfahren die Nichtkanten-Gebiete in der Regel so behandelt werden, dass sich ein gleichmäßiger homogener Bildeindruck einstellt, die Kantengebiete, welche die Detailinformationen des Bildes enthalten, dagegen so, dass diese Detailinformation besser oder deutlicher wiedergegeben wird, ist es immer negativ, wenn die Körnigkeit des Bildes fälschlicherweise als Kantenregion detektiert und daraufhin hervorgehoben wird. Immer dann, wenn Kanten- und Nichtkanten-Region unterschiedlich behandelt werden, läßt sich die Erfindung besonders vorteilhaft einsetzen. Dabei ist es irrelevant, um welche Art der Bildbehandlung es sich handelt - ob nun die Bildschärfe erhöht werden, oder das Farbrauschen in den Nichtkanten-Gebieten verringert werden oder eine Farbraum- oder Dichtekonvertierung vorgenommen werden soll, bei der in den Nichtkanten-Gebieten weniger Stufen verwendet werden, als in Kantengebieten - bei all diesen bildinhaltsabhängigen Bildbearbeitungsverfahren erweist sich die Erfindung als vorteilhaft.

Ein weiteres Beispiel für ein Verfahren, bei dem sich eine Korngrößen-abhängige Kantendetektion besonders vorteilhaft einsetzen läßt, wird in der US 5,917,955 offenbart. Im dort beschriebenen Verfahren wird ein digitales Bild durch Dichtestufenkonvertierung für den Druck aufbereitet. Das digitale Bild wird in ein Bild mit einer geringeren Dichtestufenanzahl umgewandelt, um die Datenmenge bei einer erforderlichen Bildübertragung möglichst gering zu halten. Um das übertragene Bild wieder auf dem Drucker auszugeben, wird die Anzahl der Dichtestufen jedoch wieder erhöht, falls der Drucker mehr als die übertragene Anzahl von Dichtestufen ausgeben kann. Bei dieser Dichtestufenkonvertierung werden zwei verschiedene Glättungsalgorithmen auf das Bild angewandt. Die Glättungsalgorithmen unterscheiden sich darin, wieviele Umgebungspixel bei der Glättung eines Pixels mit einbezogen werden, also wie groß der Glättungsfilter gewählt wird. Ferner werden in dem Bild Kanten detektiert, so dass das Bild in Kanten- und Nichtkanten-Regionen aufgeteilt werden kann. In Kantenregionen werden nun zur Dichtestufenkonvertierung Daten verwendet, die mit einem Glättungsalgorithmus mit einem kleineren Filter behandelt wurden. In Nichtkanten-Regionen werden dagegen Daten verwendet, die sich aus einer Kombination von mit einem kleineren und mit einem größeren Filter geglätteten Signalen ergeben. Bei der Zusammensetzung der Signale werden diese mit Faktoren gewichtet, die sich aus der Kantendetektion ergeben. Durch dieses Verfahren kann erreicht werden, daß in den Nichtkanten-Regionen, also den homogenen Bildflächen ein sehr glattes Signal entsteht, was den homogenen Bildeindruck verbessert, während in den Kanten-Regionen eine zu starke Glättung vermieden wird, so dass die Detailinformation im Bild erhalten bleibt. Auch dabei ist es natürlich sehr wichtig, nur solche Regionen als Kantenregionen zu klassifizieren, in denen sich wirklich Bilddetailinformation befindet und nicht fälschlicherweise Filmkörner als Kanten zu detektieren. Somit ist es auch bei diesem Verfahren vorteilhaft, die Kantenerkennung in Abhängigkeit von der Korngröße vorzunehmen.

Ferner ist es vorteilhaft, Bildverarbeitungsverfahren wie das in der EP-PS 0 550 243 abhängig von der Körnigkeit des Bildes zu machen. Ein derartiges Verfahren könnte so modifiziert werden, dass nur die Mittelwerte als Zielfarbe für Pixel innerhalb eines Objekts gewählt werden, wenn es sich um ein Bild mit sehr großer Körnigkeit handelt. Auf diese Weise kann die Körnigkeit und das dadurch bedingte starke Farbrauschen sehr gut kompensiert werden. Wenn die Körnigkeit und damit das Farbrauschen jedoch geringer sind, kann es vorteilhaft sein, nicht alle Pixel innerhalb des Objekts auf einen Mittelwert abzubilden, sondern beispielsweise den Farbumfang der innerhalb des Objekts vorkommenden Pixel nur zu verkleinern, um Farbkontraste des Bildes zu erhalten. In Abhängigkeit von der Körnigkeit des Bildes können vorteilhafterweise unterschiedliche dreidimensionale Tabellen für die Zielfarben abgelegt werden.

Weitere Einzelheiten und Vorteile der Erfindung ergeben sich aus den Unteransprüchen im Zusammenhang mit der Beschreibung von Ausführungsbeispielen, die anhand der Zeichnung eingehend erläutert werden.

Es zeigen:
Fig. 1 ein Filmdichtediagramm für ein homogen belichtetes Bild
Fig. 2 die Fouriertransformierte des Filmdichtediagramms und
Fig. 3 ein Ablaufdiagramm für die Bildverschärfung.

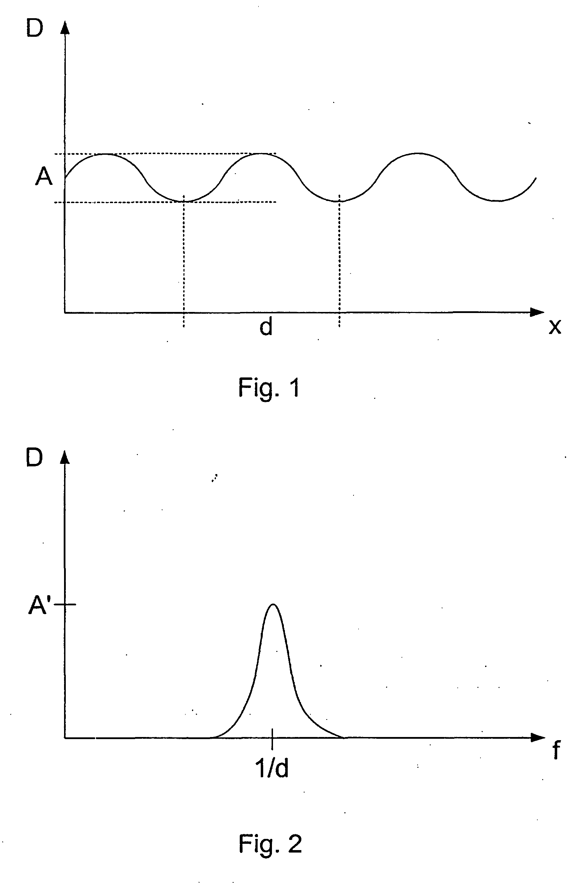

Die Körnigkeit, die fotografische Filme aufweisen, äußert sich im belichteten und entwickelten Bild in Dichteschwankungen. Scannt man das Bild ein und trägt die digitalen Daten einer Bildzeile in einem Dichtediagramm auf, so ergibt sich ein Bild, wie das in Fig. 1 schematisch dargestellte. Bedingt durch die Filmkörner schwankt die Dichte D in erster Näherung regelmäßig mit einer Amplitude A.

Diese Schwankungen treten entlang jeder Ortsrichtung X des Bildes in einem sich laufend wiederholenden Kornabstand d auf.

Figur 1 ist eine idealisierte Darstellung. In der Realität treten die Körner nicht ganz so regelmäßig im Film auf und das Bild ist in den wenigsten Bereichen homogen. Aus diesem Grund gibt sich beim Auftragen von Dichte gegen Ort bei einem normal belichteten Bild kein so einfacher Dichteverlauf, aus dem man Kornabstand und Amplitude direkt ablesen kann. Bei diesen kornbedingten Dichteschwankungen ist im realen Bild nämlich der Dichteverlauf der Bildsignale überlagert. Aus diesem Grund muß der Dichteverlauf der Körner vom Dichteverlauf der Bildsignale getrennt werden, um Korngrößen zu bestimmen. Zu diesem Zweck wird das Dichtediagramm fouriertransformiert.

Damit ergibt sich, wiederum für den idealisierten Fall dargestellt, ein Diagramm entsprechend der Figur 2. Die Fouriertransformierte, bei der die Dichte nun über die Frequenz aufgetragen ist, zeigt einen Peak bei der Frequenz f =1:d. Die Höhe A' dieses Peaks leitet sich direkt aus der Kornamplitude A ab. Das heißt, aus der Fouriertransformierten ist der Kornabstand direkt bestimmbar, die Komamplitude kann aus der Höhe des Peaks abgeleitet werden. Sobald der Kornabstand d bekannt ist, kann die Amplitude der Körner aber auch direkt bestimmt werden, indem nach, sich laufend wiederholenden, Minima und Maxima gesucht wird, welche im halben Komabstand auftreten. In einem realen Bild sieht die Fouriertransformierte der Bilddichte komplizierter aus. Bei jeder im Bild vorkommenden Frequenz ergibt sich ein kleiner Peak oder eine Schwankung im Fourierdiagramm. Da die Körner aber in der Regel sehr kleine Abstände und vergleichsweise hohe Amplituden haben, hebt sich der vom Korn bedingte Peak im Fourierdiagramm, der bei sehr hohen Frequenzen liegt, eindeutig von den Peaks der Bildsignale ab: Sobald die Korngröße bekannt ist, kann diese Information dazu verwendet werden, Bildverarbeitungsverfahren in Abhängigkeit, von der Korngröße so zu optimieren, dass bei der Bearbeitung des Bildes die Körnigkeit nicht verstärkt wird.

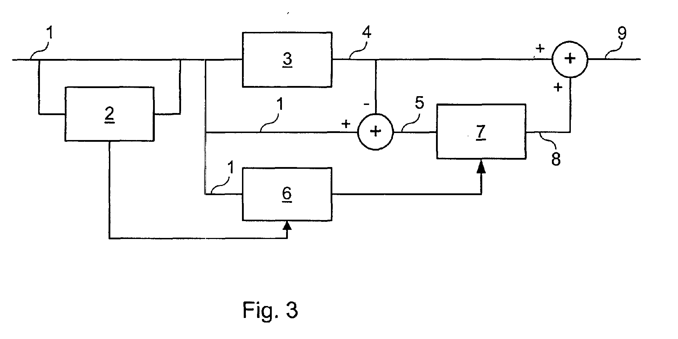

Ein Bildverarbeitungsverfahren, bei dem dies besonders wichtig ist, ist das in Figur 3 und im Ablaufdiagramm schematisch dargestellte Bildverschärfungsverfahren. Bevor die durch Einscannen des fotografischen Films gewonnenen Bildsignale 1 einem der bekannten Verschärfungsalgorithmen unterzogen werden, wird erfindungsgemäß die Körnigkeit des Bildes in 2 bestimmt. Anschließend wird in 3 das Tiefpaßsignal 4 gebildet. Das Tiefpaßsignal wird vom Bildsignal 1 subtrahiert, so dass sich aus der Differenz der Hochpaß 5 ergibt. Nun werden im Bildsignal 1 mittels eines der bekannten Kantendetektionsfilters 6 Kanten im Bild ermittelt. Hierzu wird die direkte Umgebung eines jeden Pixels betrachtet und mittels Differenzenbildung der Dichteunterschied zwischen beabstandeten Pixeln innerhalb der gewählten Umgebung bestimmt. Sobald dieser Dichteunterschied einen festgelegten Schwellwert überschreitet, ist eine Kante im Bild detektiert. Erfindungsgemäß wird nun die Wahl der Umgebung, also die Ausdehnung des Filters an die Korngröße angepaßt. Sobald die Umgebung etwa die Größe der Körner annimmt, entspricht die aufgrund der Körner zu erwartende Dichteschwankung der Kornamplitude, das heißt, alle Dichteunterschiede, die in dieser Größenordnung liegen oder darunter, zeigen ein kornbedingtes Bildrauschen und noch keine Kanten. Eine Kante ist erst detektiert, wenn der Dichteunterschied in einer derartig gewählten Umgebung größer ist als die Kornamplitude. Dieses erfindungsgemäße Verfahren gewährleistet, dass bei der Kantendetektion nur effektiv im Bildsignal auftretende Kanten, welche die Detailinformation im Bild wiedergeben, ermittelt werden. Das Ergebnis des Kantendetektionsfilters 6 wird nun verwendet, um, ähnlich wie in der US 5,978,518 beschrieben, eine Verschärfungskennlinie 7 zu erzeugen. Diese Verschärfungskennlinie wird auf das vorher gebildete Hochpaßsignal 5 angewandt, so dass ein verschärftes Hochpaßsignal 8 entsteht. Dieses verschärfte Hochpaßsignal 8 wird schließlich zum Tiefpaßsignal 4 addiert, so dass sich schließlich ein verschärftes Bildsignal 9 ergibt.

## Patentansprüche

1. Verfahren zum Bearbeiten digitaler Bilder, wobei
- die Bilder durch einscannen fotografischer Filme gewonnen werden,
- die Körnigkeit von Bildern ermittelt wird und
- Filter und/oder 1- bzw. 3-dimensionale Kennlinien auf die Bilddaten angewandt werden,
wobei die Filter und/oder die Kennlinien in Abhängigkeit von der ermittelten Körnigkeit gebildet werden.

2. Verfahren nach Anspruch 1, dadurch gekennzeichnet, dass die Körnigkeit der Bilder aus DX-Code und/oder APS-Daten ermittelt wird.

3. Verfahren nach Anspruch 1, dadurch gekennzeichnet, dass die Körnigkeit der Bilder aus der Fouriertransformierten der Bilddaten ermittelt wird.

4. Verfahren nach Anspruch 3, dadurch gekennzeichnet, dass die Kömigkeit der Bilder aus der Fouriertransformierten der Bilddaten und Information aus dem Ortsraum ermittelt wird.

5. Verfahren nach Anspruch 1, dadurch gekennzeichnet, dass eine Gradationskennlinie auf die Bilddaten angewandt wird.

6. Verfahren nach Anspruch 5, dadurch gekennzeichnet, dass die Form der Gradationskennlinie abhängig von der ermittelten Körnigkeit gewählt wird.

7. Verfahren nach Anspruch 1, dadurch gekennzeichnet, dass Filter und Kennlinien auf die Bilddaten angewandt werden, um den Bildeindruck zu verschärfen.

8. Verfahren nach Anspruch 7, dadurch gekennzeichnet, dass der Filter zur Aufspaltung des Bildsignals in Hoch- und Tiefpaßanteil vewendet wird.

9. Verfahren nach Anspruch 8, dadurch gekennzeichnet, dass die den Hochpaß kurzwellig begrenzende Frequenz in Abhängigkeit von der ermittelten Körnigkeit gewählt wird.

10. Verfahren nach Anspruch 7, dadurch gekennzeichnet, dass der Filter zur Detektion von Kanten verwendet wird.

11. Verfahren nach Anspruch 10, dadurch gekennzeichnet, dass die Filterausdehnung in Abhängigkeit von der ermittelten Körnigkeit gewählt wird.

12. Verfahren nach Anspruch 7, dadurch gekennzeichnet, dass die Kennlinie derart gebildet wird, dass erst oberhalb der der Korngröße entsprechenden Amplitude des Dichte- oder Hochpaßsignals eine Verstärkung auftritt.

13. Verfahren zum Detektieren von Kanten in digitalen Bildern, wobei
- die Bilder durch Einscannen fotografischer Filme gewonnen werden,
- die Körnigkeit von Bildern ermittelt wird und
- die Korngröße und/oder die Kornstärke bei dem Kantendetektionsverfahren berücksichtigt wird.

14. Verfahren nach Anspruch 13, dadurch gekennzeichnet, dass die Größe des Kantendetektionsfilters an den Kornabstand angepaßt wird.

15. Verfahren nach Anspruch 13, dadurch gekennzeichnet, dass der Kantendetektionsschwellwert größer als die Kornstärke gewählt wird.

16. Verfahren nach Anspruch 13, dadurch gekennzeichnet, dass das Kantendetektionsverfahren beim Verschärfen des digitalen Bildes verwendet wird.

17. Verfahren nach Anspruch 16, dadurch gekennzeichnet, dass die Kantendetektion beim Generieren der Verschärfungskennlinie berücksichtigt wird.

18. Verfahren nach Anspruch 13, dadurch gekennzeichnet, dass die Kantendetektion zur Objekterkennung benutzt wird.

19. Verfahren nach Anspruch 13, dadurch gekennzeichnet, dass die Kantendetektion zur Einteilung des Bildes in "Kanten"- und "Nicht-Kanten-Regionen" benutzt wird.

20. Verfahren nach Anspruch 19, dadurch gekennzeichnet, dass die Bilddaten in den "Kanten-Regionen" anders bearbeitet werden als in den "NichtKanten-Regionen".
